# EUROPEAN PATENT SPECIFICATION

(11) **EP 4 036 850 B1**
(45) Date of publication and mention of the grant of the patent: **23.08.2023**
(21) Application number: 21154041.4
(22) Date of filing: 28.01.2021
(51) Int. Cl.: G06T 7/00

(54) **COMPUTER VISION BASED MONOCLONAL QUALITY CONTROL**
COMPUTERVISIONBASIERTE MONOKLONALE QUALITÄTSKONTROLLE
CONTRÔLE QUALITÉ MONOCLONAL BASÉ SUR LA VISION INFORMATIQUE

(43) Date of publication of application: 03.08.2022
(73) Proprietor: Sartorius Stedim Data Analytics AB, 903 33 Umeå (SE)
(72) Inventor: SJÖGREN, Rickard, 903 33 Umeå (SE); ZEHE, Christoph, 89081 Ulm (DE); EDLUND, Christoffer, 903 33 Umeå (SE)
(74) Representative: Novagraaf International SA

(56) References cited:
- Fischbacher Brodie ET AL: "Modular deep learning enables automated identification of monoclonal cell lines", bioRxiv, 29 December 2020 (2020-12-29), pages 1-18, XP055808878, DOI: 10.1101/2020.12.28.424610 Retrieved from the Internet: URL:https://www.biorxiv.org/content/10.110 1/2020.12.28.424610v1 [retrieved on 2021-05-31]
- KIM LE ET AL: "Assuring Clonality on the Beacon Digital Cell Line Development Platform", BIOTECHNOLOGY JOURNAL, vol. 15, no. 1, 27 November 2019 (2019-11-27), page 1900247, XP055757553, DE ISSN: 1860-6768, DOI: 10.1002/biot.201900247

## Description

The present description relates to a computer-implemented method and computer system for monoclonal quality control of cell growth, which is specifically applicable for the development of cell lines for the manufacturing of biopharmaceuticals.

During the development of cell lines for the manufacturing of biopharmaceuticals, it is a regulatory requirement to demonstrate that the generated producer cells are of monoclonal origin. A lot of effort has been invested in controlling the monoclonal quality of cell lines. One important and effective aspect relates to the stage of deposition of a single cell into a microtiter well. Sophisticated techniques like cell printing have been developed to improve the probability of monoclonality of the cell growth.

Another aspect is a thorough monitoring of the cell growth specifically in an early stage during the cell line production, i.e. shortly after the cell deposition. Today, the most common approach to prove monoclonality is based on microscopic images collected during several days of growth following the clone generation process. The evaluation of the images is done manually. An experienced operator monitors the cell growth and dismisses the cell growth if the cells do not appear to be monoclonal.

Brodie Fischbacher et al.: "Modular deep learning enables automated identification of monoclonal cell lines" (bioRxiv, 29 December 2020, pages 1 to 18, XP055808878, DOI: 10.1101/2020.12.28.424610) describes a deep learning workflow that automatically detects colony presence and identifies clonality from cellular imaging. The workflow, termed Monoqlo, integrates multiple convolutional neural networks and leverages the chronological directionality of the cell culturing process. Monoclonalization of human induced pluripotent stem cells (HiPSCs) is focused on as a case example.

Kim Le et al.: "Assuring Clonality on the Beacon Digital Cell Line Development Platform" (BIOTECHNOLOGY JOURNAL, vol. 15, no. 1, 27 November 2019, page 1900247, XP055757553, DE, ISSN: 1860-6768, DOI: 10.1002/biot.201900247) describes a methodology that utilizes the Beacon instrument. A stringent in-process quality control strategy is established to enable rapid verification of clonal origin, and the workflow is validated using representative Chinese hamster ovary-derived cell lines stably expressing either green or red fluorescence protein.

It is desired to further improve the reliability of monoclonal quality of cell production. Implementations described herein solve that problem by an automated determination of whether a cell culture is monoclonal, as defined in the independent claims. The invention is defined by the independent claims, while preferred embodiments are defined in the dependent claims.

Accordingly, in one aspect a computer-implemented method according to claim 1 is provided. The method comprises acquiring a sequence of images, i.e. at least a first and a second image, of a cell culture taken at different times during cell growth, e.g. with predetermined (preferably constant) time intervals between the times when the images of the cell culture are taken. In one example, a constant time interval of 1 day (i.e. 24 hours) between the images may be preferred. Depending on the specific cells and growth conditions, shorter or longer time intervals may be applied instead. Also varying time intervals may be applied depending on the growth stage of the cells/cell culture. These time intervals may be predetermined or may even be adapted dynamically (preferably automatically) during growth of the cell culture, e.g. based on intermediate results of the monoclonal quality control, such as to dynamically (preferably automatically) refine the temporal resolution and thereby increase the reliability of the evaluation when needed.

Preferably, the images within the sequence of images are acquired in the same image format. This preferably includes the same spatial resolution and/or the same representation of light intensity and/or brightness and/or colour appearing in the cell culture. Specifically, it is preferred that the same or similar illumination conditions are prepared when taking the images. This can improve the reliability of the subsequent image analysis, specifically with regards to a temporal development of the cell culture.

The method further comprises processing each image in the sequence of images to identify cell locations of cells in the cell culture. The result of this image processing operation is a two-dimensional map of point locations, each of which representing one cell in the cell culture. Various techniques may be applied for the image processing, which may involve one or more of (trained) convolutional neural networks and/or algorithms based on histograms of oriented gradients and/or edge detectors, etc.. For example, a deep neural network may be trained or may have been trained on manually or automatically labelled microscopy images. Alternatively, a deep neural network may be trained or may have been trained on synthetic images. Examples are background images where cell shapes are copied into the images with known locations and densities (e.g. in the form of a map of point locations). A combination may also be used where the deep neural network may have been trained on a large collection of synthetic images and then fine-tuned on a smaller collection of labelled microscopy images.

"Labelled" in that sense may mean that point locations of cells represented on that images are additionally identified (e.g. as a two-dimensional map).

While trained neural networks may be specifically efficient in connection with the image processing operation of this method, alternatively other known techniques of computer-based image processing can be employed. It turned out that for the purpose of the further evaluation process in connection with the present invention, no internal structure of the identified cells needs to be evaluated/distinguished. Instead, it is sufficient to identify a single point location for each cell. This can be very efficiently achieved by a computer-based image processing operated on microscopic images that may be obtained by optical microscopy, such as bright field microscopy or phase contrast microscopy, for example. Thus, staining of the cells is no longer required, which was otherwise typically required, when a human operator visually observes cell cultures. The actual internal structure of a cell as it appears in an image (including size and/or shape and/or gradient of local image contrast) can be efficiently used to automatically identify and localize each cell, the point location of an identified cell may be set to center point of the identified graphical structure and the point location may be stored and processed based on coordinates within a coordinate system of the image.

The method further comprises determining for at least some of the images (preferably for each image) in the sequence of images the number of cells from the identified cell locations, and determining for at least one image (preferably for a plurality of images or even for each image) in the sequence of images a spatial distribution of cells from the identified cell locations. While it turned out to be most efficient if a spatial distribution is determined or evaluated for a plurality or all of the images in the sequence of images, a meaningful evaluation of the cell growth and a fairly reliable decision on the monoclonal quality can even be made already based on the spatial distribution of cell from at least one image.

The method further comprises evaluating compliance of the determined numbers of cells and the determined spatial distribution of cells with predetermined evaluation conditions being characteristic of monoclonal growth. Evaluation conditions being characteristic of monoclonal growth can be a maximum number (threshold) of cells predetermined for at least one image, preferably for a plurality of images. This threshold (maximum) number may be predetermined specifically depending on the time passed since the beginning of the cell growth and/or the type of cells and/or specific growth conditions. Such threshold may therefore be defined in terms of cell doubling time, for example.

More specifically, in a preferred embodiment the predetermined evaluation conditions define a threshold value for a monoclonal number growth rate of the cells (e.g. a maximum increase of the number of cells per time expected for a monoclonal cell line under the growth conditions of the monitored cell culture). In this case, evaluating compliance of the determined number of cells with said predetermined evaluation conditions may comprise determining a cell number growth rate as the ratio of a difference of the determined numbers of cells for two images in the sequence of images to a time interval between the times when said two images are taken; and comparing the determined cell number growth rate with the threshold value for the monoclonal number growth rate.

The method further comprises assessing and outputting a monoclonal quality indicator based on the evaluated compliance with the predetermined evaluation conditions. This output can be directly presented to a user as explicit decision on whether the monitored cell growth is monoclonal or not. Alternatively or additionally, the output can be presented to a user in terms of a warning that the cell growth is assessed to be not monoclonal. Preferably, such information may be output as soon as it has been assessed, even during a running growth process, so that the growth process can be stopped and no further time, material and effort is invested in the non-monoclonal cell culture. Alternatively or additionally, the output can be presented to a user as a probability value for the cell culture to be monoclonal. Preferably, such probability value may be presented together with supplemental assessment results (e.g. a determined cell number growth rate or its temporal development during cell growth, and/or a graphical image of the distribution of the cell locations, e.g. for one or more of the later images, and/or its temporal development). Thus, a human user can make the final decision about the monoclonal quality of the cell culture based on the probability value and the supplemental assessment results.

In a preferred embodiment, evaluating compliance with predetermined evaluation conditions comprises evaluating at least one probability value (in the following called the cell count based probability value) that represents the probability that the cell culture is monoclonal based on the determined number of cells; and evaluating at least one further probability value (in the following called the cell distribution based probability value) that represents the probability that the cell culture is monoclonal based on the determined spatial distribution of cells. In this embodiment, the monoclonal quality indicator may be assessed based at least on the cell count based probability value and the cell distribution based probability value.

Thus, the results from the different criteria may be combined in a probabilistic fashion, meaning that each evaluation results may express a probability of being monoclonal based on current evidence. These probabilities may then be combined using for instance Bayes formula to form a final probability (or decision) for the cell culture to be monoclonal based on all evidence. The different results may also be combined in a weighted fashion, meaning that they have different influence on the final decision. These weights may either be found automatically using statistical inference or machine learning methods or set manually by an expert user.

Preferably, determining a spatial distribution of cells may comprise determining for at least one image a distance between two cell locations identified for that at least one image. Moreover, evaluating compliance of the determined spatial distribution with predetermined evaluation conditions may comprise comparing the determined distance with a (predetermined) threshold distance. In a preferred embodiment, determining for at least one image a distance between two cell locations identified for that at least one image comprises determining the maximum distance of any two cell locations identified for that at least one image, wherein evaluating compliance of the determined spatial distribution with predetermined evaluation conditions comprises comparing the determined maximum distance with the (predetermined) threshold distance. This approach turned out to be specifically effective for the first couple of images (e.g. days of cell growth).

In a preferred embodiment determining a spatial distribution of cells comprises determining for at least two (directly or indirectly) subsequent images in the sequence of images a displacement between cell locations of a first one of the two images and cell locations of a second one of the two images, wherein evaluating compliance of the determined spatial distribution with predetermined evaluation conditions may comprise comparing the determined displacement with a (predetermined) threshold displacement. In a preferred embodiment, determining for at least two (directly or indirectly) subsequent images in the sequence of images a displacement between cell locations comprises determining the maximum displacement of any two cell locations, with one of which being identified in the first one of the two subsequent images and the other one being identified in the second of the two subsequent images, and wherein evaluating compliance of the determined spatial distribution with predetermined evaluation conditions may comprise comparing the determined maximum displacement with a (predetermined) threshold distance.

In a preferred embodiment (specifically if a displacement of cell between different images is to be determined) the method may further comprise automatically aligning (the) at least two subsequent images in the sequence of images. This may mean that an image alignment algorithm is used to make sure that the same location in both images refer to the same physical location in the well. This alignment may be achieved via physical edges and/or fixed markers of the well and/or based on the cell locations/distribution itself. In the latter case, the alignment may be achieved based on a minimum mean square root of location shifts of the cell locations between the subsequent images.

In another preferred embodiment, the method may further comprise determining for at least one image (preferably for a plurality of images or even for each image most preferably at least for the last image) in the sequence of images a spatial coherence characteristic (e.g. at least one spatial coherence value) from the identified cell locations, and evaluating compliance of the determined spatial coherence characteristic with predetermined coherence conditions being characteristic of monoclonal growth. In this case, the monoclonal quality indicator may be additionally assessed (and output) based on the evaluated compliance with the predetermined coherence conditions. This approach of applying spatial coherence criteria for the assessment is specifically efficient for images close to the end of the cell growth process (e.g. for the last image). For example, if the resulting cell colony (culture) on the last day is not spatially coherent, the cells may be flagged as not monoclonal. Spatially coherent may mean that the cells are located in exactly one cluster. In one embodiment, the cell colony may be considered spatially incoherent if more than one cluster is found, e.g. using a distance-based clustering algorithm with a defined distance threshold for distinguishing between clusters. An example algorithm is single linkage hierarchical clustering (Gower, John C., and Gavin JS Ross. "Minimum spanning trees and single linkage cluster analysis." Journal of the Royal Statistical Society: Series C (Applied Statistics) 18.1 (1969): 54-64). In another embodiment, the cell colony may be considered spatially incoherent if the spread of distances between all cells in the well is larger than a (predefined) distance threshold. An example method to calculate the distance spread is to calculate the distances between all cells on the last day and calculate the inter-percentile range of distances, for instance the range between the 10^{th} and 90^{th} percentiles. If the inter-percentile range is wider than a defined threshold, the cells are flagged as spatially incoherent.

In a preferred embodiment, the predetermined evaluation conditions may define a threshold value for an area growth rate of the cells. In this case, determining the spatial distribution of cells comprises determining for at least two images in the sequence of images a cell growth area as an area covered by the cell culture within the respective image. Preferably, evaluating compliance of the determined spatial distribution of cells with said predetermined evaluation conditions may comprise determining a cell area growth rate based on a change of the cell growth area determined for the at least two images in the sequence of images and the time interval between the times when said two images are taken, and comparing the determined cell area growth rate with the threshold value for the monoclonal area growth rate.

In one preferred implementation of this specific embodiment, determining the cell growth area may comprise determining a minimum radius for a circle enclosing the identified cell locations in the cell culture as the area covered by cell culture within the respective image. In another preferred implementation of this specific embodiment determining the cell growth area may comprise performing a cell segmentation process on each image to determine a cell area around each identified cell location of a cell as an area covered by said cell, and determining the cell growth area as the area covered by the determined cell areas in the cell culture for each image.

In a preferred embodiment the method may comprise determining a density distribution of identified cell locations of cells in at least one image in the sequence of images; evaluating the appearance of cluster points of cells from the determined density distribution; and deciding on the monoclonal quality depending on the evaluation of the appearance of cluster points of cells. More preferably, the predetermined evaluation conditions define a threshold cluster distance value, wherein the cell culture may be decided to be not monoclonal, if two or more cluster points are determined to appear in the density distribution at a distance from each other exceeding the predetermined threshold cluster distance value.

In another aspect, the present invention provides a corresponding computer-system according to claim 15.

In yet another aspect, there is provided a computer program product comprising program code, which when loaded and executed in a computer-system causes the computer-system to perform operation according to any method as described herein.

### BRIEF DESCRIPTION OF THE DRAWINGS

Details of one or more implementations are set forth in the exemplary drawings and description below. Other features will be apparent from the description, the drawings, and from the claims. It should be understood, however, that even though embodiments are separately described, single features of different embodiments may be combined to further embodiments.
Fig. 1 shows a flowchart describing a method according to an embodiment of the present invention;
Fig. 2 shows schematic diagrams illustrating exemplary criteria for cell distribution based assessment of monoclonal quality, namely a) illustrates maximum distance criterion and b) illustrates a maximum dislocation criterion using positions between day 1 and day 2 as specific examples.
Fig. 3 shows example bright-field microscopy images of day 4 cell cultures forming where the cells are spatially coherent in the left image and incoherent in the right; and
Fig. 4 shows distributions of distances between cells in the bright-field microscopy images shown in Fig. 3, thereby comparing a spatially coherent and a spatially incoherent cell distribution. Top histogram shows distance distribution of the cells that are spatially coherent whereas the bottom histogram shows distances in a spatially incoherent cell culture.

### DETAILED DESCRIPTION OF EMBODIMENTS

In the following text, a detailed description of examples will be given with reference to the drawings. It should be understood that various modifications to the examples may be made. In particular, one or more elements of one example may be combined and used in other examples to form new examples.

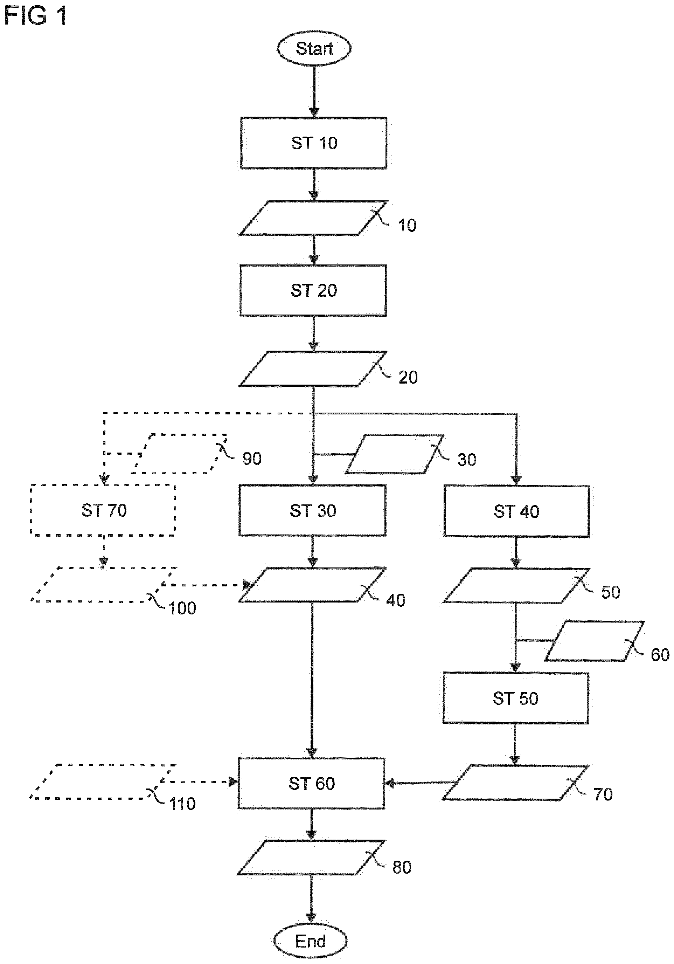

Fig. 1 shows a schematic flowchart representing the process according to a method of an exemplary embodiment of the present invention, where the development of a cell line (e.g. for the manufacturing of biopharmaceuticals) is observed and evaluated automatically over a certain time, e.g. over a couple of days. Exemplarily, growth of a cell culture may start with a single cell positioned in microtiter well and may be monitored and evaluated in view of its monoclonal development based on a sequence of images of the cell culture acquired at different times during cell growth. In one example, at least one microscopic image may be taken at least once a day. Most preferably, the evaluation is made based on images taken in regular (e.g. constant) time intervals, e.g. every 24 hours.

While Fig. 1 schematically illustrates an initial process ST10 of acquiring (collecting) microscopic images 10 before proceeding with an analysis/processing ST20 of the images 10 and an evaluation of the monoclonal quality as described further below, the images 10 may be analysed/processed and the monoclonal quality may be (at least preliminarily or partially) evaluated after each time interval of acquiring an image. Such a continuous quality evaluation can support to possibly discard a non-monoclonal cell culture at an early stage in order to reduce unnecessary cycle times or erroneously continuing growth of cell culture that can be proven to be non-monoclonal at an earlier stage.

In the example of Fig. 1, a respective microscopic image 10 may be taken once a day, i.e. at each of day 0, day 1, ... day n after start of the cell growth from a single cell. The microscopic images may be any types of microscopic images that allow the (automated) identification of position of single cells. While the invention is not limited to optical microscopy, at least some techniques of optical microscopy, such as bright field microscopy and/or phase contrast microscopy for example, are well established and very efficient for the evaluation described herein. Preferably, the images in the sequence of images comprise bright-field microscopy images. It turned out that for implementing the present invention, these specific examples of optical microscopy are very efficient since they are sufficient to allow computer-supported image analysis to reliably identify cell locations, while avoiding further cell preparations processes like staining which may unreliably influence the cell growth.

As a next operation in the embodiment of Fig. 1, the method comprises processing ST20 each image in the sequence of images to identify cell locations 20 of cells in the cell culture. These cell locations can be stored and made available for subsequent processing in term of a collection of coordinates of the cell locations in a predetermined coordinate system. Each cell location may be defined as a point location in that coordinate system. In a preferred embodiment, a deep neural network may be trained to identify cell locations, e.g. by semantic segmentation (separate cells from background), prediction cell region proposals for localization and/or instance segmentation, prediction of cell density, regression of sparse coding of cell locations, or other objective.

As further shown in Fig. 1, the cell locations 20 of at least some of the images, preferably of all images are used to determine ST40 the respective number of cells 50 corresponding to each image. In this embodiment, for each image in the sequence of images, a maximum number of cells that may be expected for the cell culture at the time during cell growth when the respective image is taken for that case of the cell culture being monoclonal is provided as a threshold value 60. The actually determined number of cells 50 for each image is then compared ST50 to the respective threshold value 60 thereby evaluating compliance results 70 of the determined numbers of cells with the maximum allowed cell numbers 60 as predetermined evaluation conditions being characteristic of monoclonal growth. The compliance results 70 may represent a result of the comparison for each individual image, i.e. as an answer to the question whether the individual cell count exceeds the respective threshold value.

Specifically, for all or a subset of days, the cell counts may be compared to the maximum allowed number of cells per day. The maximum allowed number of cells may be calculated based on the expected growth rate. Thus, based on cell counts over days of cell growth, a (first/preliminary) decision may be made about whether the cells are monoclonal.

Preferably independent from the cell counting, the method comprises determining ST30 for at least one image (preferably for multiple or even all images) in the sequence of images a spatial distribution of cells from the identified cell locations. Preferably, but not shown in Fig. 1, this may include to align the images, meaning that an image alignment algorithm is used to make sure that the same location in two or more images refer to the same physical location in the well. In the embodiment shown in Fig. 1, the determination of a spatial distribution of cells may include a determination of distances and/or dislocations of cells. Criteria for a respective evaluation of compliance of the determined spatial distribution of cells with predetermined evaluation conditions being characteristic of monoclonal growth may be provided as respective threshold values 30.

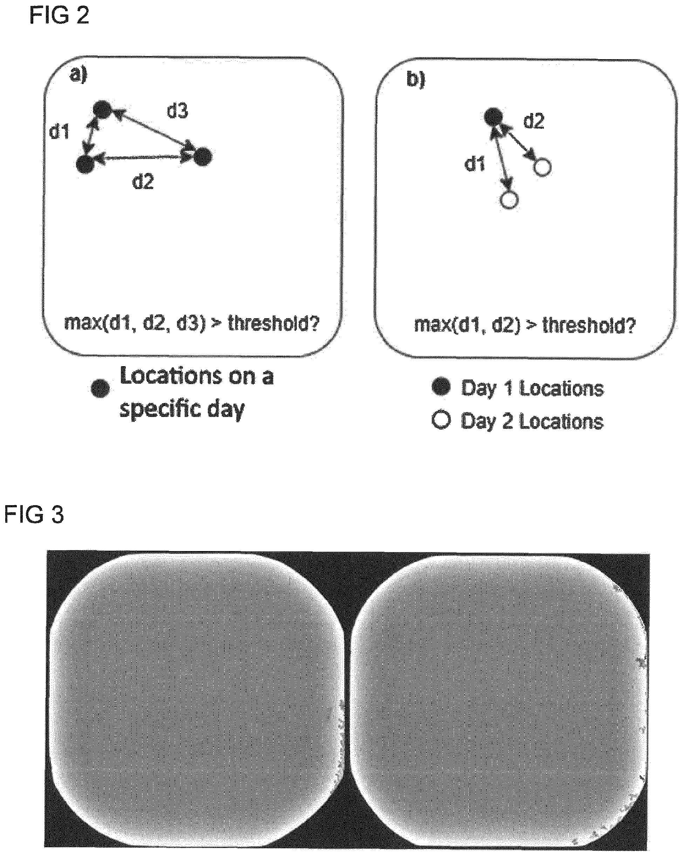

Preferred implementations for determining a spatial distribution and for evaluating compliance of the determined spatial distribution of cells with predetermined evaluation conditions are illustrated in Fig. 2. Schematic a) in Fig. 2 represents cell locations identified from a single image taken on a specific day. For these cell locations the longest distance between any two cells in the same culture is identified. If this distance is above a defined threshold distance 30, the cells may be flagged as (potentially) not monoclonal. The rationale being that is, if two cells are located far from each other, it is unlikely that they originated from a single cell by cell division. In a preferred embodiment, this process may be specifically applied to day 0 to 2 where there are relatively few cells in the well (typically 1 - 10). Specifically, this process may even be limited to the first two or three images/day.

In another aspect, a preferred dislocation analysis is illustrated in the schematic b) of Fig. 2. Specifically, cell locations may be compared between a day, noted as day n (e.g. Day 1), and the following day, denoted as day n + 1 (e.g. Day 2). If the distance from any of the cells on day n to the cells on day n + 1 is larger than a defined threshold distance 30, the cells may be flagged as (potentially) not monoclonal. The rationale is that cells are not expected to move far between day n and n + 1. If there are cells on day n + 1 that are far from the cells of day n they may originate from a cell that was in suspension and out-of-focus on day n and has sunk to focus on day n + 1. In an embodiment, this step may be restricted to the first two or three day, where it is specifically efficient.

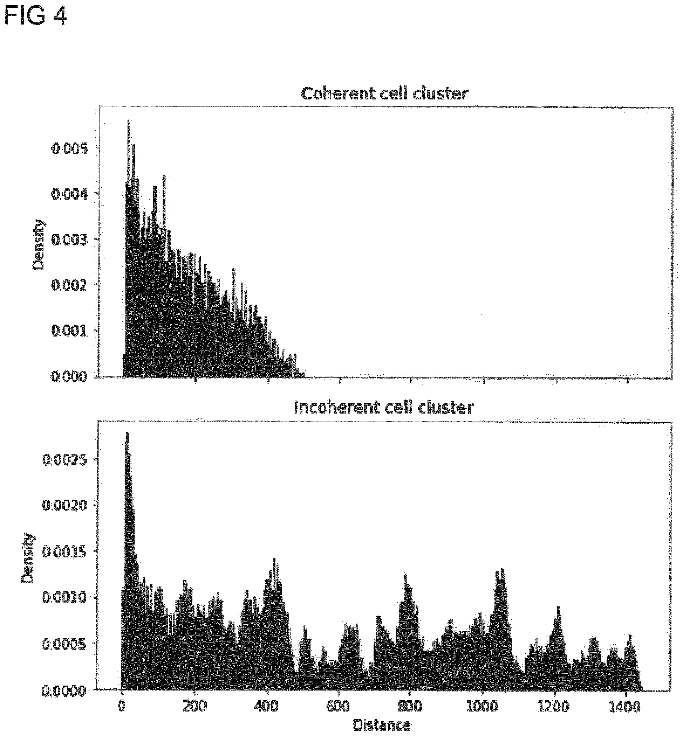

As another optional aspect, illustrated in dashed lines in Fig. 1, the method may comprise evaluating ST70 the displacement and spatial distribution of cells at the last day of the experiment. This may be the most conservative test and is not or less applicable in situations when cells need to be moved in and out of incubator since the process of moving the plate may shuffle the cluster of cells. Illustrative examples of coherent and incoherent cell clusters are shown in Fig. 3 with corresponding distance histograms in Fig. 4.

Specifically, if the resulting cell culture (colony) on the last day is located further away from the cells at the first day of the experiment than a defined threshold distance 90, the cells may be flagged as not monoclonal. In an embodiment, the distance may be calculated as the maximum distance from the cells at the first day of the cell growth to the average centroid of cells at the last day. In another embodiment the distance between cells at the first day of cell growth to the cells at the last day may be calculated as the median distance from cells at first day to the cells at last day.

If the resulting cell colony on the last day is not spatially coherent, the cells may be flagged as (potentially) not monoclonal. Spatially coherent may mean that the cells are located in exactly one cluster. In one embodiment, the cell colony may be considered spatially incoherent if more than one cluster is found using a distance-based clustering algorithm with a defined distance threshold for distinguishing between clusters. An example algorithm is a single linkage hierarchical clustering (know from Gower & Gavin, 1969, as previously mentioned already). In another embodiment, the cell colony may be considered spatially incoherent if the spread of distances between all cells in the well is larger than a defined distance threshold. An example method to calculate the distance spread is to calculate the distances between all cells on the last day and calculate the inter-percentile range of distances, for instance the range between the 10^{th} and 90^{th} percentiles. If the inter-percentile range is wider than a defined threshold, the cells may be flagged as (potentially) not monoclonal.

Optimal thresholds 30, 60, 90 may be decided automatically based on historical decisions using a machine learning method, for instance a decision tree, trained to classify monoclonal from multiclonal cultures. Alternatively, the thresholds 30, 60, 90 may be set up by an expert user.

The results from the different criteria may then be combined ST60, for example in a probabilistic fashion, meaning that each evaluation results express a probability of being monoclonal based on current evidence. These probabilities may then be combined using for instance Bayes formula to form a final probability of being monoclonal based on all evidence. The different results may also be combined in a weighted fashion, meaning that they have different influence on the final decision. These weights 110 may either be found automatically using statistical inference or machine learning methods or set manually by an expert user.

The method further comprises assessing and outputting a monoclonal quality indicator 80 based on the evaluated compliance with the predetermined evaluation conditions 30, 50, 90. This output 80 may be presented to a user, for instance in a graphical user interface or printed in a report. The results of the image processing (i.e. cell locations) and/or cell count may be presented to the user as well. Alternatively and/or additionally, the results (at least the monoclonal quality indicator 80) may be presented to a computer-based system part of an autonomous lab environment through an application programming interface (API), where the monoclonal decision (monoclonal quality indicator) may be taken in account of the control system.

## Claims

1. A computer-implemented method for automated monitoring of monoclonal quality of cell growth, comprising:
- acquiring (ST10) a sequence of images (10) of a cell culture taken at different times during cell growth;
**characterized by**
- processing (ST20) each image (10) in the sequence of images (10) to identify cell locations (20) of cells in the cell culture, wherein a single point location is identified for each cell in each image (10) in the sequence of images (10), wherein the single point location of each cell is set to a center point of an identified graphical structure of each cell, and wherein the single point location is stored and processed based on coordinates within a coordinate system of the image (10) in the sequence of images (10), resulting in a two-dimensional map of the single point locations, each of which representing one cell in the cell culture;
- determining (ST40) for at least some of the images (10) in the sequence of images (10) the number of cells (50) from the identified cell locations (20);
- determining (ST30) for at least one image (10) in the sequence of images (10) a spatial distribution of cells from the identified cell locations (20);
- evaluating compliance of the determined numbers of cells and the determined spatial distribution of cells with predetermined evaluation conditions being characteristic of monoclonal growth; and
- assessing and outputting a monoclonal quality indicator (80) based on the evaluated compliance with the predetermined evaluation conditions.

2. The method of claim 1, wherein evaluating compliance with predetermined evaluation conditions comprises:
evaluating at least one cell count based probability value that represents the probability that the cell culture is monoclonal based on the determined number of cells (50); and
evaluating at least one cell distribution based probability value that represents the probability that the cell culture is monoclonal based on the determined spatial distribution of cells,
wherein the monoclonal quality indicator (80) is assessed based at least on the cell count based probability value and the cell distribution based probability value.

3. The method of claim 1 or 2, wherein determining (ST30) a spatial distribution of cells comprises determining for at least one image (10) a distance between two cell locations (20) identified for that at least one image (10); and
wherein evaluating compliance of the determined spatial distribution with predetermined evaluation conditions comprises comparing the determined distance with a threshold distance (30).

4. The method of any one of the preceding claims, wherein determining (ST30) a spatial distribution of cells comprises determining for at least two images (10) in the sequence of images (10) a displacement between cell locations (20) of a first one of the two images (10) and cell locations (20) of a second one of the two images (10); and
wherein evaluating compliance of the determined spatial distribution with predetermined evaluation conditions comprises comparing the determined displacement with a threshold displacement.

5. The method of claim 4, further comprising automatically aligning at least two subsequent images (10) in the sequence of images (10).

6. The method of any one of the preceding claims, further comprising
determining (ST70) for at least one image (10) in the sequence of images (10) a spatial coherence characteristic from the identified cell locations (20); and
evaluating compliance of the determined spatial coherence characteristic with predetermined coherence conditions being characteristic of monoclonal growth,
wherein the monoclonal quality indicator (80) is additionally assessed based on the evaluated compliance with the predetermined coherence conditions.

7. The method of any one of the preceding claims, wherein the predetermined evaluation conditions define a threshold value for a monoclonal number growth rate of the cells; and
wherein evaluating compliance of the determined number of cells with said predetermined evaluation conditions comprises:
determining a cell number growth rate as the ratio of a difference of the determined numbers of cells for two images (10) in the sequence of images (10) to a time interval between the times when said two images (10) are taken; and
comparing the determined cell number growth rate with the threshold value for the monoclonal number growth rate.

8. The method of any one of the preceding claims, wherein the predetermined evaluation conditions define a threshold value for an area growth rate of the cells;
wherein determining the spatial distribution of cells for at least one image (10) in the sequence of images (10) comprises determining for at least two images (10) in the sequence of images (10) a cell growth area as an area covered by the cell culture within the respective image (10); and
wherein evaluating compliance of the determined spatial distribution of cells with said predetermined evaluation conditions comprises:
determining a cell area growth rate based on a change of the cell growth area determined for two images (10) in the sequence of images (10) and the time interval between the times when said two images (10) are taken; and
comparing the determined cell area growth rate with the threshold value for the monoclonal area growth rate.

9. The method of claim 8, wherein determining the cell growth area comprises determining a minimum radius for a circle enclosing the identified cell locations (20) in the cell culture as the area covered by cell culture within the respective image (10).

10. The method of claim 8, wherein determining the cell growth area comprises:
performing a cell segmentation process on each image (10) to determine a cell area around each identified cell location (20) of a cell as an area covered by said cell; and
determining the cell growth area as the area covered by the determined cell areas in the cell culture for each image (10).

11. The method of any one of the preceding claims, wherein the method comprises
determining a density distribution of identified cell locations (20) of cells in at least one image (10) in the sequence of images (10);
evaluating the appearance of cluster points of cells from the determined density distribution; and
deciding on the monoclonal quality depending on the evaluation of the appearance of cluster points of cells.

12. The method of claim 11, wherein the predetermined evaluation conditions define a threshold cluster distance value; and
wherein the cell culture is decided to be not monoclonal, if two or more cluster points are determined to appear in the density distribution at a distance from each other exceeding the predetermined threshold cluster distance value.

13. The method of any one of the preceding claims, wherein the images (10) in the sequence of images (10) comprise bright-field microscopy images.

14. The method of any one of the preceding claims, wherein processing (ST20) each image (10) in the sequence of images (10) to identify cell locations (20) of cells in the cell culture is performed by means of a trained deep neural network, preferably a convolutional neural network.

15. A computer system for automated monitoring of monoclonal quality of cell growth, comprising
- an image acquisition module for acquiring a sequence of images (10) of a cell culture taken at different times during cell growth;
**characterized by**
an image processing module for processing each image (10) in the sequence of images (10) to identify cell locations (20) of cells in the cell culture, wherein a single point location is identified for each cell in each image (10) in the sequence of images (10), wherein the single point location of each cell is set to a center point of an identified graphical structure of each cell, and wherein the single point location is stored and processed based on coordinates within a coordinate system of the image (10) in the sequence of images (10), resulting in a two-dimensional map of the single point locations, each of which representing one cell in the cell culture;
- a cell counting module for determining for at least some of the images (10) in the sequence of images (10) the number of cells from the identified cell locations (20);
- a spatial distribution module for determining (ST30) for at least one image (10) in the sequence of images (10) a spatial distribution of cells from the identified cell locations (20);
- a compliance evaluation module evaluating compliance of the determined numbers of cells and the determined spatial distribution of cells with predetermined evaluation conditions being characteristic of monoclonal growth;
- an assessment module for assessing a monoclonal quality indicator (80) based on the evaluated compliance with the predetermined evaluation conditions; and
- an output interface for outputting the assessed monoclonal quality indicator (80).

## Patentansprüche

1. Computerimplementiertes Verfahren zum automatisierten Überwachen einer monoklonalen Qualität eines Zellwachstums, das Folgendes umfasst:
- Erfassen (ST10) einer Bildfolge (10) einer Zellkultur, die zu unterschiedlichen Zeiten während eines Zellwachstums aufgenommen werden;
**gekennzeichnet durch**
- Verarbeiten (ST20) jedes Bildes (10) in der Bildfolge (10), um Zellstandorte (20) von Zellen in der Zellkultur zu identifizieren, wobei ein Einzelpunktstandort für jede Zelle in jedem Bild (10) in der Bildfolge (10) identifiziert wird, wobei der Einzelpunktstandort jeder Zelle auf einen Mittelpunkt einer identifizierten grafischen Struktur jeder Zelle eingestellt ist und wobei der Einzelpunktstandort auf Basis von Koordinaten in einem Koordinatensystem des Bildes (10) in der Bildfolge (10) gespeichert und verarbeitet wird, was in einer zweidimensionalen Karte der Einzelpunktstandorte resultiert, von denen jeder eine Zelle in der Zellkultur repräsentiert;
- Bestimmen (ST40) der Anzahl von Zellen (50) anhand der identifizierten Zellstandorte (20) für mindestens einige der Bilder (10) in der Bildfolge (10);
- Bestimmen (ST30) einer räumlichen Verteilung von Zellen anhand der identifizierten Zellstandorte (20) für mindestens ein Bild (10) in der Bildfolge (10);
- Beurteilen einer Konformität der bestimmten Anzahlen von Zellen und der bestimmten räumlichen Verteilung von Zellen mit vorbestimmten Beurteilungsbedingungen, die für ein monoklonales Wachstum charakteristisch sind; und
- Bewerten und Ausgeben eines monoklonalen Qualitätsindikators (80) auf Basis der beurteilten Konformität mit den vorbestimmten Beurteilungsbedingungen.

2. Verfahren nach Anspruch 1, wobei das Beurteilen der Konformität mit vorbestimmten Beurteilungsbedingungen Folgendes umfasst:
Beurteilen von mindestens einem zellzählungsbasierten Wahrscheinlichkeitswert, der die Wahrscheinlichkeit repräsentiert, dass die Zellkultur monoklonal ist, auf Basis der bestimmten Anzahl von Zellen (50); und
Beurteilen von mindestens einem zellverteilungsbasierten Wahrscheinlichkeitswert, der die Wahrscheinlichkeit repräsentiert, dass die Zellkultur monoklonal ist, auf Basis der räumlichen Verteilung von Zellen,
wobei der monoklonale Qualitätsindikator (80) mindestens auf Basis des zellzählungsbasierten Wahrscheinlichkeitswertes und des zellverteilungsbasierten Wahrscheinlichkeitswertes bewertet wird.

3. Verfahren nach Anspruch 1 oder 2, wobei das Bestimmen (ST30) einer räumlichen Verteilung von Zellen das Bestimmen eines Abstands zwischen zwei Zellstandorten (20), die für mindesten ein Bild (10) identifiziert werden, für das mindestens eine Bild (10) umfasst; und
wobei das Beurteilen einer Konformität der bestimmten räumlichen Verteilung mit vorbestimmten Beurteilungsbedingungen das Vergleichen des bestimmten Abstands mit einem Schwellwertabstand (30) umfasst.

4. Verfahren nach einem der vorhergehenden Ansprüche, wobei das Bestimmen (ST30) einer räumlichen Verteilung von Zellen das Bestimmen eines Versatzes zwischen Zellstandorten (20) eines ersten von zwei Bildern (10) und Zellstandorten (20) eines zweiten von zwei Bildern (10) für die mindestens zwei Bilder (10) in der Bildfolge (10) umfasst und
wobei das Beurteilen einer Konformität der bestimmten räumlichen Verteilung mit vorbestimmten Beurteilungsbedingungen das Vergleichen des bestimmten Versatzes mit einem Schwellwertversatz umfasst.

5. Verfahren nach Anspruch 4, das ferner das automatische Ausrichten von mindestens zwei aufeinanderfolgenden Bildern (10) in der Bildfolge (10) umfasst.

6. Verfahren nach einem der vorhergehenden Ansprüche, das ferner Folgendes umfasst
Bestimmen (ST70) einer räumlichen Kohärenzcharakteristik anhand der identifizierten Zellstandorte (20) für mindestens ein Bild (10) in der Bildfolge (10); und
Beurteilen einer Konformität der bestimmten räumlichen Kohärenzcharakteristik mit vorbestimmten Kohärenzbedingungen, die für ein monoklonales Wachstum charakteristisch sind,
wobei der monoklonale Qualitätsindikator (80) zusätzlich auf Basis der beurteilten Konformität mit den vorbestimmten Kohärenzbedingungen bewertet wird.

7. Verfahren nach einem der vorhergehenden Ansprüche, wobei die vorbestimmten Beurteilungsbedingungen einen Schwellwert für eine monoklonale Anzahlwachstumsrate der Zellen definieren; und
wobei das Beurteilen einer Konformität der bestimmten Anzahl von Zellen mit den vorbestimmten Beurteilungsbedingungen Folgendes umfasst:
Bestimmen einer Zellanzahlwachstumsrate als das Verhältnis einer Differenz der bestimmten Anzahlen von Zellen für zwei Bilder (10) in der Bildfolge (10) zu einem Zeitintervall zwischen den Zeiten, zu denen die zwei Bilder (10) aufgenommen werden; und
Vergleichen der bestimmten Zellanzahlwachstumsrate mit dem Schwellwert für die monoklonale Anzahlwachstumsrate.

8. Verfahren nach einem der vorhergehenden Ansprüche, wobei die vorbestimmten Beurteilungsbedingungen einen Schwellwert für eine Bereichswachstumsrate der Zellen definieren;
wobei das Bestimmen der räumlichen Verteilung von Zellen für mindestens ein Bild (10) in der Bildfolge (10) das Bestimmen eines Zellwachstumsbereichs als einen Bereich, der von der Zellkultur im jeweiligen Bild (10) abgedeckt wird, für mindestens zwei Bilder (10) in der Bildfolge (10) umfasst; und
wobei das Beurteilen einer Konformität der bestimmten räumlichen Verteilung von Zellen mit den vorbestimmten Beurteilungsbedingungen Folgendes umfasst:
Bestimmen einer Zellbereichswachstumsrate auf Basis einer Änderung des Zellwachstumsbereichs, der für zwei Bilder (10) in der Bildfolge (10) bestimmt wird, und des Zeitintervalls zwischen den Zeiten, zu denen die zwei Bilder (10) aufgenommen werden; und
Vergleichen der bestimmten Zellbereichswachstumsrate mit dem Schwellwert für die monoklonale Bereichswachstumsrate.

9. Verfahren nach Anspruch 8, wobei das Bestimmen des Zellwachstumsbereichs das Bestimmen eines Mindestradius für einen Kreis, der die identifizierten Zellstandorte (20) in der Zellkultur umschließt, als den von der Zellkultur im jeweiligen Bild (10) abgedeckten Bereich umfasst.

10. Verfahren nach Anspruch 8, wobei das Bestimmen des Zellwachstumsbereichs Folgendes umfasst:
Durchführen eines Zellsegmentierungsprozesses an jedem Bild (10), um einen Zellbereich um jeden identifizierten Zellstandort (20) einer Zelle als einen von der Zelle abgedeckten Bereich zu bestimmen; und
Bestimmen des Zellwachstumsbereichs als den Bereich, der von den bestimmten Zellbereichen in der Zellkultur für jedes Bild (10) bestimmt wird.

11. Verfahren nach einem der vorhergehenden Ansprüche, wobei das Verfahren Folgendes umfasst
Bestimmen einer Dichteverteilung von identifizierten Zellstandorten (20) von Zellen in mindestens einem Bild (10) in der Bildfolge (10);
Beurteilen des Erscheinungsbildes von Clusterpunkten von Zellen anhand der bestimmten Dichteverteilung; und
Beschließen der monoklonalen Qualität in Abhängigkeit von der Beurteilung des Erscheinungsbildes von Clusterpunkten von Zellen.

12. Verfahren nach Anspruch 11, wobei die vorbestimmten Beurteilungsbedingungen einen Schwellwert für einen Clusterabstand definieren; und
wobei beschlossen wird, dass die Zellkultur nicht monoklonal ist, wenn bestimmt wird, dass zwei oder mehr Clusterpunkte in der Dichteverteilung in einem Abstand voneinander erscheinen, der den vorbestimmten Schwellwert für den Clusterabstand überschreitet.

13. Verfahren nach einem der vorhergehenden Ansprüche, wobei die Bilder (10) in der Bildfolge (10) Hellfeldmikroskopiebilder umfassen.

14. Verfahren nach einem der vorhergehenden Ansprüche, wobei das Verarbeiten (ST20) von jedem Bild (10) in der Bildfolge (10) zum Identifizieren von Zellstandorten (20) von Zellen in der Zellkultur mittels eines trainierten tiefen neuronalen Netzwerks, vorzugsweise eines faltenden neuronalen Netzwerks, durchgeführt wird.

15. Computersystem zum automatisierten Überwachen einer monoklonalen Qualität eines Zellwachstums, das Folgendes umfasst
- ein Bilderfassungsmodul zum Erfassen einer Bildfolge (10) einer Zellkultur, die zu unterschiedlichen Zeiten während eines Zellwachstums aufgenommen werden;
**gekennzeichnet durch**
- ein Bildverarbeitungsmodul zum Verarbeiten jedes Bildes (10) in der Bildfolge (10), um Zellstandorte (20) von Zellen in der Zellkultur zu identifizieren, wobei ein Einzelpunktstandort für jede Zelle in jedem Bild (10) in der Bildfolge (10) identifiziert wird, wobei der Einzelpunktstandort jeder Zelle auf einen Mittelpunkt einer identifizierten grafischen Struktur jeder Zelle eingestellt ist und wobei der Einzelpunktstandort auf Basis von Koordinaten in einem Koordinatensystem des Bildes (10) in der Bildfolge (10) gespeichert und verarbeitet wird, was in einer zweidimensionalen Karte der Einzelpunktstandorte resultiert, von denen jeder eine Zelle in der Zellkultur repräsentiert;
- ein Zellzählmodul zum Bestimmen der Anzahl von Zellen anhand der identifizierten Zellstandorte (20) für mindestens einige der Bilder (10) in der Bildfolge (10);
- ein räumliches Verteilungsmodul zum Bestimmen (ST30) einer räumlichen Verteilung von Zellen anhand der identifizierten Zellstandorte (20) für mindestens ein Bild (10) in der Bildfolge (10);
- ein Konformitätsbeurteilungsmodul zum Beurteilen einer Konformität der bestimmten Anzahlen von Zellen und der bestimmten räumlichen Verteilung von Zellen mit vorbestimmten Beurteilungsbedingungen, die für ein monoklonales Wachstum charakteristisch sind;
- ein Bewertungsmodul zum Bewerten und Ausgeben eines monoklonalen Qualitätsindikators (80) auf Basis der beurteilten Konformität mit den vorbestimmten Beurteilungsbedingungen; und
- eine Ausgabeschnittstelle zum Ausgeben des bewerteten monoklonalen Qualitätsindikators (80).

## Revendications

1. Procédé informatique destiné à la surveillance automatisée de la qualité monoclonale du développement de cellules, comprenant :
- l'acquisition (ST10) d'une séquence d'images (10) d'une culture cellulaire prises à différents moments pendant le développement de cellules ;
**caractérisé par** le traitement (ST20) de chaque image (10) de la séquence d'images (10) afin d'identifier des emplacements de cellules (20) dans la culture cellulaire, dans lequel un seul emplacement est identifié pour chaque cellule sur chaque image (10) de la séquence d'images (10), dans lequel l'emplacement de chaque cellule est défini par rapport à un point central d'une structure graphique identifiée de chaque cellule, et dans lequel l'emplacement est stocké et traité sur la base de coordonnées au sein d'un système de coordonnées de l'image (10) de la séquence d'images (10), afin d'obtenir une cartographie en deux dimensions des emplacements, qui représentent chacun une cellule de la culture cellulaire ;
- la détermination (ST40), pour au moins certaines des images (10) de la séquence d'images (10), du nombre de cellules (50) à partir des emplacements identifiés (20) ;
- la détermination (ST30), pour au moins une image (10) de la séquence d'images (10), d'une répartition spatiale des cellules à partir des emplacements de cellules identifiés (20) ;
- l'évaluation de la conformité des nombres déterminés de cellules et de la répartition spatiale déterminée des cellules à des conditions d'évaluation prédéterminées caractéristiques du développement monoclonal ; et
- l'évaluation et la délivrance d'un indicateur de qualité monoclonale (80) sur la base de la conformité évaluée aux conditions d'évaluation prédéterminées.

2. Procédé selon la revendication 1, dans lequel l'évaluation de la conformité aux conditions d'évaluation prédéterminées comprend :
l'évaluation d'au moins un nombre de cellules sur la base d'une valeur de probabilité qui représente la probabilité que la culture cellulaire soit monoclonale sur la base du nombre déterminé de cellules (50) ; et
l'évaluation d'au moins une répartition de cellules sur la base d'une valeur de probabilité qui représente la probabilité que la culture cellulaire soit monoclonale sur la base de la répartition spatiale des cellules déterminée,
dans lequel l'indicateur de qualité monoclonale (80) est évalué sur la base au moins de la valeur de probabilité basée sur le nombre de cellules et de la valeur de probabilité basée sur la répartition de cellules.

3. Procédé selon la revendication 1 ou 2, dans lequel la détermination (ST30) d'une répartition spatiale des cellules comprend la détermination, pour au moins une image (10), d'une distance entre deux emplacements de cellules (20) identifiés pour la au moins une image (10) ; et
dans lequel l'évaluation de la conformité de la répartition spatiale déterminée aux conditions d'évaluation prédéterminées comprend la comparaison de la distance déterminée avec une distance de seuil (30).

4. Procédé selon l'une quelconque des revendications précédentes, dans lequel la détermination (ST30) d'une répartition spatiale des cellules comprend la détermination, pour au moins deux images (10) de la séquence d'images (10), d'un déplacement entre les emplacements de cellules (20) d'une première des deux images (10) et les emplacements de cellules (20) d'une seconde des deux images (10) ;
et
dans lequel l'évaluation de la conformité de la répartition spatiale déterminée aux conditions d'évaluation prédéterminées comprend la comparaison du déplacement déterminé avec un déplacement de seuil.

5. Procédé selon la revendication 4, comprenant en outre l'alignement automatique d'au moins deux images suivantes (10) de la séquence d'images (10).

6. Procédé selon l'une quelconque des revendications précédentes, comprenant en outre
la détermination (ST70), pour au moins une image (10) de la séquence d'images (10), d'une caractéristique de cohérence spatiale à partir des emplacements de cellules identifiés (20) ; et
l'évaluation de la conformité de la caractéristique de cohérence spatiale déterminée à des conditions de cohérence prédéterminées caractéristiques du développement monoclonal,
dans lequel l'indicateur de qualité monoclonale (80) est en outre évalué sur la base de la conformité évaluée aux conditions de cohérence prédéterminées.

7. Procédé selon l'une quelconque des revendications précédentes, dans lequel les conditions d'évaluation prédéterminées définissent une valeur de seuil pour la vitesse d'augmentation du nombre monoclonal de cellules ; et
dans lequel l'évaluation de la conformité du nombre déterminé de cellules auxdites conditions d'évaluation prédéterminées comprend :
la détermination d'une vitesse d'augmentation du nombre de cellules sous forme de rapport entre une différence de nombre déterminé de cellules pour deux images (10) de la séquence d'images (10) et un intervalle de temps entre les moments auxquels lesdites deux images (10) sont prises ; et
la comparaison de la vitesse d'augmentation du nombre de cellules déterminé avec la valeur de seuil pour la vitesse d'augmentation du nombre monoclonal.

8. Procédé selon l'une quelconque des revendications précédentes, dans lequel les conditions d'évaluation prédéterminées définissent une valeur de seuil pour une vitesse de développement de surface cellulaire ;
dans lequel la détermination de la répartition spatiale des cellules pour au moins une image (10) de la séquence d'images (10) comprend la détermination, pour au moins deux images (10) de la séquence d'images (10), d'une zone de développement cellulaire en tant que zone couverte par la culture cellulaire sur l'image respective (10) ; et
dans lequel l'évaluation de la conformité de la répartition spatiale déterminée des cellules auxdites conditions d'évaluation prédéterminées comprend :
la détermination d'une vitesse de développement de surface cellulaire sur la base d'un changement de la zone de développement cellulaire déterminé pour deux images (10) de la séquence d'images (10) et de l'intervalle de temps entre les moments auxquels lesdites deux images (10) sont prises ; et
la comparaison de la vitesse de développement de surface cellulaire déterminée avec la valeur de seuil pour la vitesse de développement de surface monoclonale.

9. Procédé selon la revendication 8, dans lequel la détermination de la zone de développement cellulaire comprend la détermination d'un rayon minimum pour un cercle qui entoure les emplacements de cellule identifiés (20) dans la culture cellulaire en tant que zone couverte par la culture cellulaire sur l'image respective (10).

10. Procédé selon la revendication 8, dans lequel la détermination de la zone de développement cellulaire comprend :
l'exécution d'un processus de segmentation cellulaire sur chaque image (10) afin de déterminer une surface cellulaire autour de chaque emplacement de cellule identifié (20) d'une cellule en tant que zone couverte par ladite cellule ;
et
la détermination de la zone de développement cellulaire en tant que zone couverte par les zones de cellules déterminées dans la culture cellulaire pour chaque image (10).

11. Procédé selon l'une quelconque des revendications précédentes, dans lequel le procédé comprend
la détermination d'une répartition de densité des emplacements de cellules identifiés (20) sur au moins une image (10) de la séquence d'images (10) ;
l'évaluation de l'apparence de points de regroupement de cellules à partir de la répartition de densité déterminée ; et
la détermination de la qualité monoclonale selon l'évaluation de l'apparence des points de regroupement de cellules.

12. Procédé selon la revendication 11, dans lequel les conditions d'évaluation prédéterminées définissent une valeur de distance seuil de regroupement ; et
dans lequel la culture cellulaire est déterminée comme n'étant pas monoclonale si deux points de regroupement ou plus sont déterminés comme apparaissant dans la répartition de densité à une distance les uns des autres qui dépasse la valeur de distance seuil entre les points prédéterminée.

13. Procédé selon l'une quelconque des revendications précédentes, dans lequel les images (10) de la séquence d'images (10) comprennent des images de microscopie en champ clair.

14. Procédé selon l'une quelconque des revendications précédentes, dans lequel le traitement (ST20) de chaque image (10) de la séquence d'images (10) afin d'identifier les emplacements de cellules (20) dans la culture cellulaire est exécuté à l'aide d'un réseau neuronal profond entraîné, de préférence un réseau neuronal convolutionnel.

15. Système informatique destiné à la surveillance automatisée de la qualité monoclonale du développement de cellules, comprenant
- un module d'acquisition d'images destiné à acquérir une séquence d'images (10) d'une culture cellulaire prises à différents moments pendant le développement de cellules ;
**caractérisé par** un module de traitement d'images destiné à traiter chaque image (10) de la séquence d'images (10) afin d'identifier des emplacements de cellules (20) dans la culture cellulaire, dans lequel un seul emplacement est identifié pour chaque cellule sur chaque image (10) de la séquence d'images (10), dans lequel l'emplacement de chaque cellule est défini par rapport à un point central d'une structure graphique identifiée de chaque cellule, et dans lequel l'emplacement est stocké et traité sur la base de coordonnées au sein d'un système de coordonnées de l'image (10) de la séquence d'images (10), afin d'obtenir une cartographie en deux dimensions des emplacements, qui représentent chacun une cellule de la culture cellulaire ;
- un module de comptage de cellules destiné à déterminer, pour au moins certaines des images (10) de la séquence d'images (10), le nombre de cellules à partir des emplacements identifiés (20) ;
- un module de répartition spatiale destiné à déterminer (ST30), pour au moins une image (10) de la séquence d'images (10), une répartition spatiale des cellules à partir des emplacements de cellules identifiés (20) ;
- un module d'évaluation de conformité qui évalue la conformité des nombres déterminés de cellules et de la répartition spatiale déterminée des cellules à des conditions d'évaluation prédéterminées caractéristiques du développement monoclonal ;
- un module d'évaluation destiné à évaluer un indicateur de qualité monoclonale (80) sur la base de la conformité évaluée aux conditions d'évaluation prédéterminées ; et
- une interface de sortie destinée à délivrer l'indicateur de qualité monoclonale évalué (80).
